# EUROPÄISCHE PATENTANMELDUNG

(11) **EP 0 541 161 A2**
(43) Veröffentlichungstag der Anmeldung: **12.05.1993**
(21) Anmeldenummer: 92203326.1
(22) Anmeldetag: 29.10.1992
(51) Int. Cl.: H04L 1/00, H03M 13/00

(54) **Übertragungssystem mit Einzel- und Bündelfehlerkorrektur für ein zyklisch codiertes Digitalsignal**

(30) Priorität: 02.11.1991 DE 4136118
(71) Anmelder: Philips Patentverwaltung GmbH, 22335 Hamburg (DE); Philips Electronics N.V., 5621 BA Eindhoven (NL)
(72) Erfinder: Schneider-Obermann, Herbert, c/o Philips, W-8500 Nürnberg 10 (DE); Zimmermann, Gerd, c/o Philips Patentverwaltung, W-8500 Nürnberg 10 (DE); Koch, Wolfgang, Dr., c/o Philips Patentverwaltung, W-8500 Nürnberg 10 (DE)
(74) Vertreter: Volmer, Georg, Dipl.-Ing.

(57) **Zusammenfassung**

Die Erfindung betrifft ein Übertragungssystem mit einem Sender (100) mit einem Coder zur Codierung eines Informationssignals (11) in ein aus dem Informationssignal (11) und einem Redundanzsignal (12) zusammengesetztes Digitalsignal (11, 12), wobei das Redundanzsignal (12) aus dem Informationssignal (11) mittels eines zyklischen Codes generiert ist, und mit einem Empfänger (101) mit einem Decoder mit einem Speicher (2) zur Speicherung des Informationssignals (11) und mit einer Fehlerkorrektureinrichtung mit einem rückkoppelbaren Schieberegister (3), zur Verarbeitung des Digitalsignals (11,12). Das Übertragungssystem soll in einer einzigen Fehlerkorrektureinrichtung sowohl die Korrektur von Bündelfehlern, als auch die Korrektur von Einzelfehlern ermöglichen.

Es wird vorgeschlagen, daß die Fehlerkorrektureinrichtung des Decoders eine Bündelfehlererkennungseinrichtung (4) zur Gewinnung einer ersten Fehlerinformation (B) aus vorgebbaren Speicherinhalten (S₀ .. S₁₁) des Schieberegisters (3) und eine Einzelfehlererkennungseinrichtung (5) zur Gewinnung einer zweiten Fehlerinformation (G) aus allen Speicherinhalten (S₀ .. S₁₁) des Schieberegisters (3) aufweist, und daß zur Auswertung der ersten (B) und zweiten (E) Fehlerinformation und zur Verknüpfung (E1) der Speicherinhalte (S₀ .. S₁₇) des Schieberegisters (3) mit den Speicherinhalten der Speichereinheit (2) eine Steuereinrichtung (8) vorgesehen ist.

Das Übertragungssystem ist beispielsweise bei Bildübertragungssystemen anwendbar.

## Beschreibung

Die Erfindung betrifft ein Übertragungssystem mit einem Sender mit einem Coder zur Codierung eines zu sendenden Informationssignals in ein aus dem Informationssignal und einem Redundanzsignal zusammengesetztes Digitalsignal, wobei das Redundanzsignal aus dem zu sendenden Informationssignal mittels eines zyklischen Codes generiert ist, und mit einem Empfänger mit einem Decoder mit einem Speicher zur Speicherung des empfangenen Informationssignals und mit einer Fehlerkorrektureinrichtung mit einem rückkoppelbaren Schieberegister zur Verarbeitung des empfangenen Digitalsignals.

Ein derartiges Übertragungssystem wird beispielsweise bei der Bildübertragung für Bildtelefone verwendet. Im Empfänger dabei ein Decoder wird beispielsweise zum Decodieren eines mit dem sogenannten BCH-Code (Bose-ChaudhuriHocquenghem) codierten Digitalsignals benötigt. Ein derartig codiertes Digitalsignal wird beispielsweise zur Bildübertragung verwendet. Zur Codierung wird ein zu sendendes Informationssignal mittels einer Codierschaltung in ein das Informationssignal sowie ein Redundanzsignal enthaltenes Digitalsignal umgewandelt. Das Redundanzsignal wird dabei aus dem zu sendenden Informationssignal mittels eines zyklischen Codes generiert.

Aus US 4,592,054 ist ein Decoder bekannt, bei dem ein aus einem Informationssignal und einem Redundanzsignal zusammengesetztes zyklisch codiertes Digitalsignal sowohl einer Einzel- als auch einer Bündelfehlererkennungseinrichtung zugeführt wird, die parallel und jeweils unabhängig arbeiten. Mit Hilfe einer Entscheidungseinrichtung wird ermöglicht, daß entweder das Ausgangssignal der Einzelfehlererkennungseinrichtung oder das Ausgangssignal der Bündelfehlererkennungseinrichtung auf den Ausgang des Decoders geschaltet wird.

Der Erfindung liegt die Aufgabe zugrunde, ein Übertragungssystem der eingangs genannten Art anzugeben, das auf einfache Weise sowohl die Korrektur von Bündelfehlern, als auch die Korrektur von Einzelfehlern ermöglicht.

Diese Aufgabe wird bei einem Übertragungssystem der eingangs genannten Art dadurch gelöst, daß die Fehlerkorrektureinrichtung des Decoders eine Bündelfehlererkennungseinrichtung zur Gewinnung einer Bündelfehler kennzeichnenden ersten Fehlerinformation aus vorgebbaren Speicherinhalten des Schieberegisters und eine Einzelfehlererkennungseinrichtung zur Gewinnung einer Einzelfehler kennzeichnenden zweiten Fehlerinformation aus allen Speicherinhalten des Schieberegisters aufweist, und daß zur Auswertung der ersten und zweiten Fehlerinformation und zur Verknüpfung der Speicherinhalte des Schieberegisters mit den Speicherinhalten der Speichereinheit eine Steuereinrichtung vorgesehen ist.

Ein derartiges Übertragungssystem ist beispielsweise zur Übertragung eines BCH-codierten Digitalsignals geeignet. Im Sender wird das zu übertragende Informationssignal mittels des Coders in das zu übertragende Digitalsignal umgesetzt, das aus einem aus dem Informationssignal generierten Redundanzsignal und dem Informationssignal selbst zusammengesetzt ist. Dieses Digitalsignal wird über einen Übertragungskanal, beispielsweise eine leitungsgebundene Übertragungsstrecke oder einen Funkübertragungskanal an den Empfänger weitergeleitet. Der Empfänger enthält den Decoder, wobei nach dem Einlesen des Digitalsignals in den Decoder, d.h. in die Speichereinheit sowie in das Schieberegister, eine gleichzeitige Überprüfung der Speicherinhalte des Schieberegisters auf Bündelfehler einer bestimmten Länge sowie auf Einzelfehler einer bestimmten Anzahl erfolgt. Die so gewonnene erste bzw. zweite Fehlerinformation zur Kennzeichnung von Bündelfehlern bzw. Einzelfehlern wird der Steuereinrichtung zugeführt, die entscheidet, welche Maßnahmen zur Fehlerkorrektur getroffen werden müssen, bzw. ob eine Fehlerkorrektur erfolgen soll oder ein nicht korrigierbarer Fehler vorliegt. Ein derartiges Übertragungssystem ermöglicht somit in einer einzigen Fehlerkorrektureinrichtunh eine kombinierte Korrektur von zufälligen Fehlern (Einzelfehlern) und Fehlerbündeln. Die Fehlerkorrektureinrichtung benötigt dabei nur ein Schieberegister zur Fehlerbestimmung wodurch sich eine einfache Implementierung ergibt.

Zur Vermeidung einer Falschkorrektur ist in der Steuereinrichtung des Decoders zum Vergleich mit einem durch Speicherinhalte des Schieberegisters ermittelten Fehlermuster mindestens ein Kontrollfehlermuster gespeichert ist, wobei bei Übereinstimmung des Kontrollfehlermusters mit dem Fehlermuster die Verknüpfung der Speicherinhalte des Schieberegisters mit dem Speicherinhalten der Speichereinheit gesperrt wird. Vor einer Korrektur findet somit eine Überprüfung beispielsweise mit Hilfe einer Tabelle statt, in der prinzipiell zweideutige Kontrollfehlermuster gespeichert sind. Diese Kontrollfehlermuster werden mit dem jeweiligen im Schieberegister vorhandenen Fehlermuster im Fehlerfall verglichen und so Falschkorrekturen beispielsweise bei Fehlerereignissen, deren Abstand größer als der korrigierbare Abstand ist, vermieden. Somit wird eine Überforderung des Decoders erkannt.

Im Decoder werden zur Ableitung der ersten Fehlerinformation wird die Speicherinhalte des Schieberegisters nach dem Einlesen des Digitalsignals sowie nach jedem Weiterschieben des Schieberegisters überprüft. Der Decoder arbeitet dabei nach dem sogenannten Error Trapping-Verfahren, das beispielsweise in "Error Control Coding, Fundamentals and Applications, Shu Lin und Daniel J. Costello, Seiten 125 bis 131 und Seiten 259 bis 282" beschrieben ist. Dabei wird eine bestimmte Anzahl von Speicherinhalten des Schieberegisters auf den Inhalt "0" überprüft.

Zur Unterscheidung verschiedener Fälle ist im Decoder zur Ermittlung der Anzahl des Weiterschiebens des Schieberegisters ein Zähler vorgesehen. Es können hiermit die Fälle unterschieden werden, ob beispielsweise ein Bündelfehler nur in den Prüfstellen des Digitalsignals aufgetreten ist, bzw. in welchen Positionen ein Bündelfehler lokalisiert ist.

Eine einfache Korrektur des in der Speichereinheit gespeicherten Informationssignals kann dadurch erfolgen, daß zur Verknüpfung des Informationssignals und des Ausgangssignals des Schieberegisters ein erstes Exclusiv-Oder-Gatter vorgesehen ist.

Die Decodierung des Digitalsignals wird auf einfache Weise dadurch gesteuert, daß der Decoder ein erstes Gatter zum Sperren des Einlesens des Digitalsignals, ein zweites Gatter zum Sperren des Auslesens desInformationssignals aus der Speichereinheit, ein drittes Gatter zum Sperren der Rückkopplung des Schieberegisters und ein viertes Gatter zum Sperren der Ausgabe zur Verknüpfung des Ausgangssignals der Speicherinhalte des Schieberegisters mit den Speicherinhalten der Speichereinheit aufweist.

Die Funktion dem Decoders erfolgt auf einfache Weise dadurch, daß im Decoder das Digitalsignal bei gesperrten zweiten und vierten Gattern gleichzeitig in die Speichereinheit und in das rückgekoppelte Schieberegister einlesbar sind, daß nach dem Einlesen des Digitalsignals in das Schieberegister und nach jedem Weiterschieben des Schieberegisters die vorgebbaren Speicherinhalte des Schieberegisters auf Bündelfehler und alle Speicherinhalte auf Einzelfehler überprüft werden, daß in Abhängigkeit von der Anzahl des Weiterschiebens des Schieberegisters eine Bündelfehlererkennungseinrichtung und eine Einzelfehlererkennungseinrichtung die Steuereinrichtung so ansteuern, daß das zweite und/oder das dritte und/oder das vierte Gatter gesperrt und/oder geöffnet werden.

Im folgenden wird die Erfindung anhand der in den Figuren dargestellten Ausführungsbeispiele näher erläutert.

Es zeigen:
Fig.1 ein Übertragungssystem und
Fig. 2 einen Decoder.

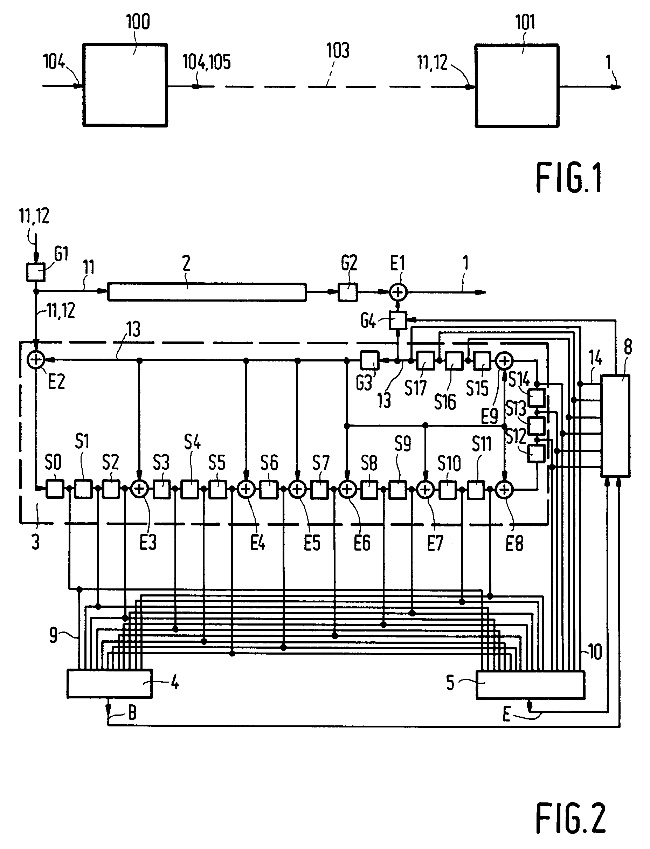

Das in Fig. 1 dargestellte Übertragungssystem besteht aus einem Sender 100, dem ein zu übertragendes bzw. zu sendendes Informationssignal 104 zugeführt wird. Am Ausgang des Senders 100 liegt ein zu übertragendes codiertes Digitalsignal 104, 105, das über einen Übertragungskanal 103 einem Empfänger 101 zugeführt wird. Am Eingang des Empfängers liegt ein zu decodierendes empfangenes Digitalsignal 11, 12, während am Ausgang des Empfängers ein decodiertes Digitalsignal 1 anliegt.

Das in Fig. 1 dargestellte Übertragungssystem ist beispielsweise zur Übertragung eines BCH-codierten Videosignals 105 für ein Bildtelefon geeignet. Dabei kann der Empfänger 101 auch Teil eines Bildtelefons sein. Im folgenden soll kurz die Funktion des in Fig. 1 dargestellten Übertragungssystems erläutert werde. Der Sender 100 weist eine in Fig. 1 nicht näher dargestellte im folgenden auch als Coder bezeichnete Codiereinrichtung auf, die das zu sendende Informationssignal, z.B. ein ein digitalisiertes Videosignal in das zu sendende Digitalsignal 104, 105 umsetzt. Das zu sendende Digitalsignal 104, 105 setzt sich aus dem zu sendenden Informationssignal 104 und einem aus dem Informationssignal 104 generierten Redundanzsignal 105 zusammen. Dieses Redundanzsignal 105 dient der Fehlerkorrektur auf der Empfangsseite. Das dem Empfänger zugeführte empfangene Digitalsignal 11, 12 enthält somit ebenfalls das Informationssignal 11 und das Redundanzsignal 12, wobei durch Störungen des Übertragungskanals 103 Unterschiede zwischen dem gesendeten Digitalsignal 104, 105 und dem empfangenen Digitalsignal 11, 12 vorhanden sein können. Aufgabe des im Empfänger 101 angeordneten Decoders ist es nun, die wahrscheinlichste ursprüngliche Information zu bestimmen, bzw. zu erkennen, daß mit großer Wahrscheinlichkeit im Digitalsignal 11, 12 unkorrigierbar viele Fehler aufgetreten sind. Die Funktion des Decoders wird im Zusammenhang mit Fig. 2 erläutert.

Fig. 2 zeigt einen Decoder für ein zyklisch codiertes Digitalsignal. Der in der Fig. 2 dargestellte Decoder besteht im wesentlichen aus einer Speichereinheit 2, einem Schieberegister 3, einer Einzelfehlererkennungseinrichtung 5, einer Bündelfehlererkennungseinrichtung 4 sowie einer Steuereinrichtung 8. Dem Decoder wird ein aus einem Informationssignal 11 und einem Redundanzsignal 12 zusammengesetztes Digitalsignal 11, 12 über ein erstes Gatter G1 zugeführt. Die Ausgabe des Ausgangssignals der Speichereinheit 2 ist mittels eines zweiten Gatters G2 sperrbar. Das Schieberegister wird aus 18 Registern S₀ .. S₁₇ gebildet. Die Rückkopplung des Schieberegisters ist mittels eines dritten Gatters G3 sperrbar. Das Ausgangssignal 13 des Schieberegisters wird außerdem über ein viertes Gatter G4 einem ersten Exklusiv-Oder E1 zugeführt, das eine Verknüpfung mit dem Ausgangssignal des zweiten Gatters G2 ermöglicht. Am Ausgang des ersten Exklusiv-Oders E1 liegt ein decodiertes Digitalsignal 1. Das Ausgangssignal des dritten Gatters G3 wird einem zweiten Exklusiv-Oder E2 am Eingang des Schieberegisters 3, einem dritten Exklusiv-Oder E3, das zwischen dem zweiten S₂ und dritten Register S₃ eingeschaltet ist, einem vierten Exklusiv-Oder E4, das zwischen dem fünften S₅ und sechsten S₆ Register eingeschaltet ist, einem fünften Exklusiv-Oder, das zwischen dem sechsten S₆ und siebten S₇ Register eingeschaltet ist, einem sechsten Exklusiv-Oder, das zwischen dem siebten S₇ und achten S₈ Register, einem siebten Exklusiv-Oder E₇, das zwischen dem neunten S₉ und zehnten S₁₀ Register angeordnet ist, einem achten Exklusiv-Oder E8, das zwischen dem elften S₁₁ und zwölften S₁₂ Register angeordnet ist, sowie einem neunten Exklusiv-Oder E9, das zwischen dem Register S₁₄ und dem Register S₁₅ eingeschaltet ist, zugeführt. Die Speicherinhalte der Register S₀ .. S₁₁ sind über Verbindungsleitungen 9 einer Bündelfehlererkennungseinrichtung 4 zuführbar. Die Speicherinhalte sämtlicher Register S₀ .. S₁₇ sind über weitere Verbindungsleitungen 10 der Einzelfehlererkennungseinrichtung 5 zugeführt. Am Ausgang der Bündelfehlererkennungseinrichtung 4 liegt eine erste Fehlerinformation B zur Kennzeichnung von Bündelfehlern, während am Ausgang der Einzelfehlererkennungseinrichtung 5 eine zweite Fehlerinformation E zur Kennzeichnung von Einzelfehlern liegt. Die erste B und zweite E Fehlerinformation wird der Steuereinrichtung 8 zugeführt, der darüber hinaus über Verbindungsleitungen 14 auch die Speicherinhalte der Register S₁₂ ... S₁₇ zugeführt werden. Am Ausgang der Steuereinheit 8 liegt ein Steuersignal S, welches das vierte Gatter G4 ansteuert.

Der in der Fig. 2 dargestellte Decoder ist für ein Digitalsignal 11, 12 geeignet, das auf dem (511, 493) BCH-Code beruht. Zur Erläuterung soll an dieser Stelle kurz auf den prinzipiellen Aufbau einer Codier-Decodierstrecke eingegangen werden. Dabei wird ein Informationsvektor, der im Falle des (511, 493) BCH-Codes aus 493 Informationsbit besteht, durch einen Coder in einen Codevektor mit 511 Bit-Länge überführt. Ein derartiger Codevektor setzt sich somit aus 493 Informationsbits sowie 18 Prüfbits als Redundanzsignal zusammen. Der Codevektor wird bei der Übertragung durch Kanalstörungen in einen Empfangsvektor verfälscht. Dieser Empfangsvektor entspricht dem in der Fig. dargestellten Digitalsignal 11, 12, das aus dem Informationssignal 11 und dem Redundanzsignal 12 zusammengesetzt ist, wobei dem Digitalsignal auch Kanalstörungen überlagert sein können. Aufgabe des Decoders ist es nun, die wahrscheinlichste ursprüngliche Information zu bestimmen, bzw. zu erkennen, daß mit großer Wahrscheinlichkeit im Digitalsignal 11, 12 unkorrigierbar viele Fehler aufgetreten sind. Die zyklische Codierung erfolgt durch eine Schieberegisterschaltung, die entsprechend der in der Fig. dargestellten Schieberegisterschaltung 3 zur Decodierung ausgebildet ist. Bei der Codierung werden in einem ersten Schritt zunächst die Informationsbits in das Schieberegister eingelesen, wobei das Schieberegister rückgekoppelt ist, in einem zweiten Schritt wird nun der Rückkopplungspfad unterbrochen, anschließend werden die Prüfbits ausgelesen und stellen zusammen mit den Informationsbits das vollständige codierte Digitalsignal dar. Das Redundanzsignal wird somit aus dem Informationssignal mittels eines zyklischen Codes generiert.

Im folgenden wird die Funktionsweise des in der Fig. dargestellten Decoders nach Schritten A bis C aufgeteilt beschrieben.

Im Schritt A wird während des Empfangs des Digitalsignals 11, 12 das Informationssignal 11 gleichzeitig in die Speichereinheit 2 und in das Schieberegister 3 geladen. Mit jedem Takt wird dabei bei rückgekoppeltem Schieberegister, d.h. das dritte Gatter G3 ist geöffnet, der Inhalt des Schieberegisters 3 weiter nach rechts geschoben. Hierbei sind jeweils das erste Gatter G1 und das dritte Gatter G3 geöffnet, während das zweite Gatter G2 und das vierte Gatter G4 gesperrt sind. In der Speichereinheit 2 werden nur die ersten 493 Stellen des empfangenen Digitalsignals 11, 12, d.h. das Informationssignal gespeichert. Sobald das empfangene Digitalsignal 11, 12 vollständig in das rückgekoppelte Schieberegister eingelaufen ist, wird der Inhalt der ersten 12 Register S₀ .. S₁₁ von der Einzelfehlererkennungseinrichtung überprüft. Diese Überprüfung erfolgt auch nach jedem Weiterschieben des Schieberegisters. Enthalten alle 12 Register S₀ .. S₁₁ den Inhalt "0", so ist der Bündelfehlererkennungstest erfolgreich. Dies ergibt sich aus den Grundlagen zur Decodierung durch Error-Trapping. Der in der Fig. dargestellte Decoder ist dabei so ausgelegt, daß ein Bündelfehler bis zu einer Länge, die kleiner als 7 Bits ist, entdeckt werden. Wurde mit Hilfe der Bündelfehlererkennungseinrichtung 4 ein Bündelfehler entdeckt, so sind, je nach Anzahl der Shifts, d.h. wie oft das Schieberegister 3 weitergeschoben wurde, drei Fälle zu unterscheiden. Liegt die Anzahl der Shifts zwischen 0 und 12, so folgt hieraus, daß ein Bündelfehler nur in den Prüfstellen des Digitalsignals 11, 12, d.h. im Redundanzsignal 12, aufgetreten ist und somit keine Korrektur erforderlich ist. Die Steuereinrichtung 8 öffnet somit das Gatter G2 und das dekodierte Digitalsignal 1 wird aus der Speichereinheit 2 unverändert ausgelesen. Liegt die Anzahl der Shifts zwischen 13 und 17, so enthalten die 18 minus der Anzahl der Shifts rechten Speicher das Fehlermuster in den Prüfstellen, die verbleibenden nächsten Speicher des Schieberegisters 3 enthalten den Fehleranteil im Informationssignal. Durch das dritte Gatter G3 wird nun die Rückkopplung gesperrt und das Schieberegister 3 sooft weitergeschoben, bis die Anzahl der Shifts 18 beträgt. Dann sind die "rechten" Bits, die den Fehleranteil in den Prüfbits enthalten, aus dem Schieberegister 3 herausgeschoben und werden nicht mehr zur Korrektur verwendet. Die jetzt im Schieberegister ganz rechts stehenden Bits entsprechen dem Fehleranteil im Informationssignal 11. Das zweite Gatter G2 sowie das vierte Gatter G4 werden von der Steuereinrichtung 8 angesteuert und geöffnet und die aufgetretenen Fehler durch bitweise Addition Modulo 2 mittels des Exklusiv-Oders E1 korrigiert. Liegt die Anzahl der Shifts über 17, so wird das zweite Gatter G2 nach dem 18. Weiterschieben des Schieberegisters geöffnet, d.h. die Informationsbit des Informationssignals 11 werden im Takt ausgegeben. Gleichzeitig wird das rückgekoppelte Schieberegister bei geöffnetem Gatter G3 weitergeschoben. Sobald die ersten 12 Registerinhalte S₀ .. S₁₁ alle "0" anzeigen, ist in den verbleibenden 6 Registern S₁₂ .. S₁₇ das Bündelfehlermuster enthalten. Das dritte Gatter G3 wird dann gesperrt und das vierte Gatter G4 geöffnet, so daß die Information mit Hilfe des ersten Exklusiv-Oder-Gatters E1 korrigiert werden kann. Beträgt die Anzahl der Shifts 511 und werden die 12 ersten Registerinhalte S₀ .. S₁₁ nie gleichzeitig zu "0", so ist ein Fehlermuster aufgetreten, das mit diesem Verfahren nicht korrigiert werden kann. Das ausgegebene Informationssignal 11 ist in diesem Fall mit großer Wahrscheinlichkeit fehlerbehaftet. In diesem Fall wird somit ein Fehler erkannt, eine Korrektur jedoch nicht durchgeführt.

Der in der Fig. 2 dargestellte Decoder eignet sich jedoch nicht nur zur Bündelfehlerkorrektur, sondern neben der Bündelfehlerkorrektureinrichtung 4 ist auch die Einzelfehlerkorrektureinrichtung 5 vorgesehen, die geeignet ist, eine Einzelfehlerkorrektur durchzuführen, die ebenfalls auf dem Error-Trapping-Verfahren basiert. Der in der Fig. dargestellte Decoder ermöglicht die Korrektur aller Fehlermuster vom Gewicht kleiner gleich 2, die innerhalb von 18 aufeinanderfolgenden Stellen auftreten. Die Einzelfehlerkorrektur erfolgt parallel zur Bündelfehlerkorrektur und soll im folgenden beschrieben werden. Zunächst erfolgt entsprechend der Beschreibung zur Bündelfehlerkorrektur zunächst das Einlesen des empfangenen Digitalsignals 11, 12. Sobald das Digitalsignal 11, 12 vollständig in das Schieberegister 3 eingelesen ist, prüft die Einzelfehlerkorrektureinrichtung 5 das sogenannte Gewicht des Syndromregisterinhalts, d.h. es wird die Anzahl der von 0 verschiedenen Registerinhalte S₀ .. S₁₇ ermittelt. Beträgt das Gewicht, d.h. die Anzahl der von 0 verschiedenen Registerinhalte mehr als 2, so folgt hieraus, daß keine Entscheidung möglich ist, in diesem Fall erfolgt ein Weiterschieben mit rückgekoppelten Schieberegister, d.h. das dritte Gatter G3 ist geöffnet. Stellt die Einzelfehlerkorrektureinrichtung 5 direkt nach dem Einlesen des Digitalsignals 11, 12 ein Gewicht kleiner gleich 2 fest, so sind nur Fehler in den Prüfbits des Digitalsignals aufgetreten und somit keine Korrektur des Informationssignals erforderlich. In diesem Fall wird das Gatter G2 geschlossen und die Information als Informationssignal 1 unverändert ausgelesen. Ist der Fehlererkennungstest mit Hilfe der Fehlererkennungseinrichtung 5 erfolgreich, so ist das sogenannte Fehlermuster im Schieberegister 3 eingefangen. Je nach Anzahl der Shifts, die mittels eines Zählers ermittelt wurden, sind für die Einzelfehlerkorrektur zwei Fälle zu unterscheiden. Liegt die Anzahl der Shifts zwischen 0 und 18, so wird der Rückkopplungspfad mittels des Gatters G3 gesperrt und der Schieberegisterinhalt taktweise weitergeschoben, bis die Anzahl der Shifts 18 beträgt. Anschließend wird bei geschlossenem zweiten Gatter G2 und viertem Gatter G4 mittels des ersten Exklusiv-Oders E1 die Fehlerkorrektur durchgeführt. Beträgt die Anzahl der Shifts mehr als 18, so wird das zweite Gatter G2 geschlossen, d.h. die Informationsbits werden im Takt ausgegeben, gleichzeitig wird der Inhalt des Schieberegisters 3 bei geschlossenem Rückkopplungspfad weitergeschoben. Sobald das Gewicht, d.h. die Anzahl von 0 verschiedenen Stellen der Schieberegisterinhalte S₀ .. S₁₇ kleiner oder gleich 2 ist, sperrt das dritte Gatter G3 den Rückkopplungspfad, das Gatter G4 wird geschlossen und die Information taktweise korrigiert. Beträgt die Anzahl der Shifts 511 und wird die Bedingung, daß das Gewicht, d.h. die Anzahl der von 0 verschiedenen Registerinhalte kleiner gleich 2 in 511 Takten nie erfüllt, so kann keine Fehlerkorrektur mit diesem Decoder durchgeführt werden. In diesem Fall ist das empfangene Informationssignal 1 mit großer Wahrscheinlichkeit fehlerbehaftet.

Bei dem in der Fig. dargestellten Decoder ist in der Steuereinrichtung 8 mindestens ein Kontrollmuster gespeichert, das mit einem durch die Speicherinhalte S₁₂ .. S₁₇ des Schieberegisters 3 ermittelten Fehlermuster vergleichbar ist. Hierzu wird das Fehlermuster über Verbindungsleitungen 14 der Steuereinrichtung 8 zugeführt. Ziel ist es hierbei, eine Überforderung des Decoders zu erkennen, um eine Falschkorrektur zu vermeiden. Vor einer Korrektur findet somit eine Überprüfung statt, in der zweideutige Fehlermuster erkannt werden und damit die Wahrscheinlichkeit für eine Falschkorrektur verringert wird.

Im Ausführungsbeispiel ist ein Decoder für ein BCH-codiertes Digitalsignal beschrieben, eine Anwendung der Erfindung ist jedoch auch für andere zyklisch codierte Digitalsignale möglich.

## Patentansprüche

1. Übertragungssystem mit einem Sender (100) mit einem Coder zur Codierung eines zu sendenden Informationssignals (104) in ein aus dem zu sendenden Informationssignal (104) und einem Redundanzsignal (105) zusammengesetztes Digitalsignal (104, 105), wobei das Redundanzsignal (105) aus dem zu sendenden Informationssignal (104) mittels eines zyklischen Codes generiert ist, und mit einem Empfänger (101) mit einem Decoder mit einem Speicher (2) zur Speicherung eines empfangenen Informationssignals (11) und mit einer Fehlerkorrektureinrichtung mit einem rückkoppelbaren Schieberegister (3) zur Verarbeitung des empfangenen Digitalsignals (11,12),
dadurch gekennzeichnet, daß die Fehlerkorrektureinrichtung des Decoders eine Bündelfehlererkennungseinrichtung (4) zur Gewinnung einer Bündelfehler kennzeichnenden ersten Fehlerinformation (B) aus vorgebbaren Speicherinhalten (S₀ .. S₁₁) des Schieberegisters (3) und eine Einzelfehlererkennungseinrichtung (5) zur Gewinnung einer Enzelfehler kennzeichnenden zweiten Fehlerinformation (E) aus allen Speicherinhalten (S₀ .. S₁₇) des Schieberegisters (3) aufweist, und daß zur Auswertung der ersten (B) und zweiten (E) Fehlerinformation und zur Verknüpfung (E1) der Speicherinhalte (S₀ .. S₁₇) des Schieberegisters (3) mit den Speicherinhalten der Speichereinheit (2) eine Steuereinrichtung (8) vorgesehen ist.

2. Übertragungssystem nach Anspruch 1,
dadurch gekennzeichnet, daß in der Steuereinrichtung (8) des Decoders zum Vergleich mit einem durch Speicherinhalte (S₁₂ .. S₁₇) des Schieberegisters (3) ermittelten Fehlermuster mindestens ein Kontrollfehlermuster gespeichert ist, wobei bei Übereinstimmung des Kontrollfehlermusters mit dem Fehlermuster die Verknüpfung (E1) der Speicherinhalte (S₀ .. S₁₇) des Schieberegisters (3) mit den Speicherinhalten der Speichereinheit (2) gesperrt wird.

3. Übertragungssystem nach einem der Ansprüche 1 oder 2,
dadurch gekennzeichnet, daß im Decoder zur Ableitung der ersten Fehlerinformation (B) zur Kennzeichnung von Fehlerbündeln die Speicherinhalte (S₀ .. S₁₁) des Schieberegisters nach dem Einlesen des Digitalsignals (11, 12) sowie nach jedem Weiterschieben des Schieberegisters (3) überprüft werden.

4. Übertragungssystem nach einem der Ansprüche 1 bis 3,
dadurch gekennzeichnet, daß im Decoder zur Zählung der Anzahl des Weiterschiebens des Schieberegisters (3) ein Zähler vorgesehen ist.

5. Übertragungssystem nach einem der Ansprüche 1 bis 4,
dadurch gekennzeichnet, daß zur Verknüpfung (E1) des Informationssignals (11) und des Ausgangssignals (13) des Schieberegisters (3) ein erstes Exclusiv-Oder-Gatter (E1) vorgesehen ist.

6. Übertragungssystem nach einem der Ansprüche 1 bis 5,
dadurch gekennzeichnet, daß der Decoder ein erstes Gatter (G1) zum Sperren des Einlesens des Digitalsignals (11, 12), ein zweites Gatter (G2) zum Sperren des Auslesens des Informationssignals (11) aus der Speichereinheit (2), ein drittes Gatter (G3) zum Sperren der Rückkopplung des Schieberegisters (3) und ein viertes Gatter (G4) zum Sperren der Ausgabe zur Verknüpfung (E1) des Ausgangssignals der Speicherinhalte (S₀ .. S₁₇) des Schieberegisters (3) mit den Speicherinhalten der Speichereinheit (2) aufweist.

7. Übertragungssystem nach einem der Ansprüche 1 bis 6,
dadurch gekennzeichnet, daß im Decoder das Digitalsignal (11, 12) bei gesperrtem zweiten (G2) und vierten (G4) Gatter gleichzeitig in die Speichereinheit (2) und in das rückgekoppelte Schieberegister (3) einlesbar ist, daß nach dem Einlesen des Digitalsignals (11, 12) in das Schieberegister (3) und nach jedem Weiterschieben des Schieberegisters (3) die vorgebbaren Speicherinhalte (S₀ .. S₁₁) auf Bündelfehler und alle Speicherinhalte (S₀ .. S₁₇) auf Einzelfehler überprüft werden, daß in Abhängigkeit von der Anzahl des Weiterschiebens des Schieberegisters (3) eine Bündelfehlererkennungseinrichtung (4) und eine Einzelfehlererkennungseinrichtung (5) die Steuereinrichtung (8) so ansteuern, daß das zweite (G2) und/oder das dritte (G3) und/oder das vierte (G4) Gatter gesperrt und/oder geöffnet werden.

8. Empfänger (101) für ein Übertragungssystem nach einem der Ansprüche 1 bis 7.

9. Decoder für ein Übertragungssystem nach einem der Ansprüche 1 bis 7.

10. Bildtelefon mit einem Decoder nach Anspruch 9.
